(19) Europäisches Patentamt
European Patent Office
Office européen des brevets

(11) **EP 2 509 045 B1**

(12) **EUROPEAN PATENT SPECIFICATION**

(45) Date of publication and mention
of the grant of the patent:
**21.06.2017 Bulletin 2017/25**

(51) Int Cl.:
*G06T 7/00* *(2017.01)*    *H04N 7/01* *(2006.01)*

(21) Application number: **12162465.4**

(22) Date of filing: **30.03.2012**

(54) **Method of, and apparatus for, detecting image boundaries in video data**

Verfahren von und Vorrichtung zur Erkennung von Bildgrenzen in Videodaten

Procédé et appareil permettant de détecter des limites d'image dans des données vidéo

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2011 TR 201103446**

(43) Date of publication of application:
**10.10.2012 Bulletin 2012/41**

(73) Proprietor: **Vestel Elektronik Sanayi ve Ticaret A.S.
45030 Manisa (TR)**

(72) Inventor: **Özkalayci, Burak Oguz
45030 Manisa (TR)**

(74) Representative: **Beck Greener
Fulwood House
12 Fulwood Place
London WC1V 6HR (GB)**

(56) References cited:
**EP-A2- 2 107 521      WO-A2-02/05547
US-A1- 2007 286 452**

**Description**

The present invention relates to a method of, and apparatus for, detecting image boundaries. More particularly, the present invention relates to a method of, and apparatus for, detecting image boundaries in at least one frame of video image data.

Video images are often transmitted or received from a number of different sources. Each source may have a particular native resolution and aspect ratio. For example, a news broadcast may be in a 4:3 aspect ratio, whereas a film may be broadcast or received from a source such as a DVD or Blu-ray media player in a widescreen aspect such as 16:9.

However, a display device such as a television generally has a fixed native aspect ratio. For cathode-ray tube (CRT) televisions, this is usually 4:3 or 16:9. For Liquid Crystal Display (LCD) televisions, this is more commonly 16:9 although screens having other aspect ratios may be available.

In order to display video images having aspect ratios different from the native aspect ratio of the display device, it is necessary to manipulate the video image so that it can be displayed correctly. One approach is simply to stretch or squeeze the video image so that it completely fills the display area of the display device. However, this approach undesirably distorts the image. An alternative is known as "pan and scan" in which sections of the video image are cropped to enable the display device to display the video image in full screen. This may occur, for example, where a 16:9 video signal is displayed on a 4:3 display device. In this case, the outermost left and right sections of the video image will not be displayed. This is also undesirable because a proportion of the video content is cropped and not displayed.

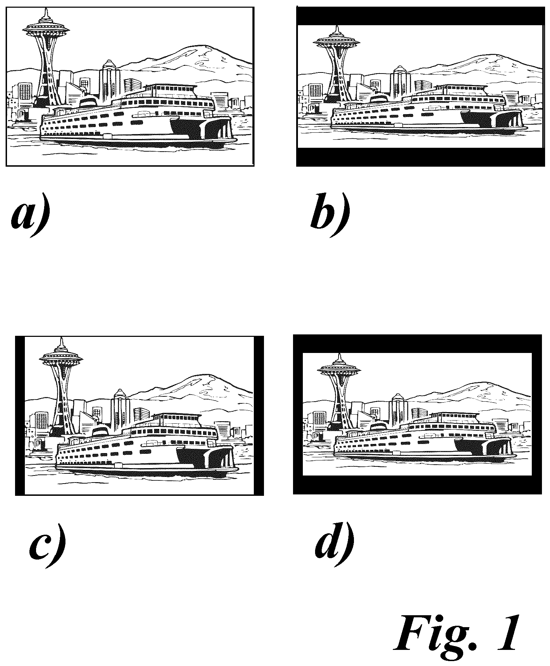

A further alternative technique commonly employed is to rescale the video image such that the entire video image can be displayed on the display device by introducing matte (or passé-partout) regions to bound the video image. The matte regions are usually black so as not to distract from the video image. Examples of this are shown in Figures 1a) to 1d).

Figure 1 a) shows an example of a frame of a video image which shares the same aspect ratio as the display device. Figure 1b) shows a case where, for example, a 16:9 video image is displayed on a 4:3 display device, or a widescreen film displayed on a 16:9 or 4:3 display device. In this case black strips or border regions are present above and below the video image.

Concomitantly, Figure 1c) shows, for example, a 4:3 video image displayed on a 16:9 display device. In this case, black borders are visible at the left and right hand sides of the display device. Finally, Figure 1d) shows a situation where the video image is of lower resolution than the display device and where the image is not scaled to fit the whole display area of the display device. In this case, matte or border regions surround the whole video image.

In many cases, it is desirable to perform image processing on the frames of the video image after each frame has been retrieved and before the video image is displayed. This may to, for example, upscale or downscale the resolution of the video image to match that of the display device. Such a situation may occur when, for example, upscaling a standard definition television broadcast for display on a high definition television.

Additionally or alternatively, it may be desired to perform frame rate up-conversion of the video data in order to improve the image quality of the video image. On some television displays it is desirable to increase the frame rate from that at which the video data being displayed was originally captured. This may be, in part, due to the display device having different display standards from that at which the video data was captured.

Many of the latest high-performance televisions, particularly large screen and wide screen (16:9 format) versions, use a 100Hz screen refresh rate instead of the conventional 50Hz refresh rate. One benefit of this is to avoid screen flicker, which becomes more perceptible as the size of the display screen increases. However, for example, standard definition television broadcast transmissions comprise video data at 50Hz. Therefore, for display on a larger television display, upconversion to 100 Hz is necessary or desirable.

Up conversion requires new interpolated frames to be added to the original or source video data. Typically, one interpolated frame is determined and added temporally between two existing frames. For many upconversion applications, the location of the image boundaries (and, concomitantly, the location of the constant-colour matte regions surrounding the image) may be needed in advance.

For instance, frame rate up-conversion applications, in general, operate on blocks of pixels (e.g, 16 x 16 blocks) as opposed to individual pixels. Therefore, there is a need to discriminate the image boundaries correctly so that the upconversion application knows the exact area to process. Otherwise, the constant colour matte borders of the display may be used in the frame interpolation. This can lead to undesirable image artefacts near the boundaries of the video image.

Another application instance for image boundary detection in advance is smart resizing of the image to display resolution. An example of this is seam carving-based media retargeting applications as described in "A system for retargeting of streaming video"; P. Krähenbühl P et al, ACM Transactions on Graphics 2009: 28(5):1. In such an arrangement, the application may be initialised by setting the region of interest in advance using image boundary detection algorithms.

US-A-6,208,385 relates to a boundary detection method and apparatus in which the boundary regions are determined by using a clock pulse generator to split an image into a plurality of separate columns. Then, within each column, image properties of each column are calculated. Upper and lower edges are counted to identify image boundaries. EP-A-2 107 521 discloses method and apparatus for detecting a border region in an image. The disclosed method, in embodiments, sums luminance values in a direction parallel to a border (either horizontal or vertical) and searches for a maximum gradient of the summed values in a direction perpendicular to the border.

There is a need in the art to provide a hardware-efficient and effective method for determining the boundaries of an image prior to post-processing of the image.

According to a first aspect of the present invention, there is provided a method for detecting the boundaries of an image region of video data, the method comprising: retrieving, in raster scan order, pixel data of a frame of video data from a data source; performing, on pixel data of at least some pixels of said frame, edge detection for each of said pixels in raster scan order to determine whether the or each pixel lies adjacent an edge region having an edge which is perpendicular or close to perpendicular to the raster scan direction, wherein the pixel data are read in scan line order and wherein said edge detection is based on pixel data of pixels of the current scan line; determining the boundaries of the image region of said frame from said vertical edge detection by comparing edge detected pixels adjacent one another in raster scan order to determine a transition from a non-edge region to an edge region or from an edge region to a non-edge region; identifying, from any pixels having a transition from a non-edge region to an edge region, the pixel having, in raster scan order, the smallest horizontal and vertical coordinate indices; defining said pixel coordinates as the upper left corner of the image region; identifying, from any pixels having a transition from an edge region to a non-edge region, the pixel having, in raster scan order, the largest horizontal and vertical coordinate indices; and defining said pixel coordinates as the lower right corner of the image region.

By providing such a method, pixel data can be processed to determine image boundaries as data is retrieved from a source (such as, for example, a TV aerial or a media player) in raster scan order. This provides an efficient approach to detecting image boundaries prior to, for example, an image processing operation. By utilising detection of edges perpendicular to the scan direction, detection can be performed on data read in scan line order to determine image boundaries. Regions of the frame which do not contain images (for example, border regions) are likely to be constant colour and, thus, no edges will be present. Consequently, any detected edges are likely to be within the image region.

In one embodiment, the step of processing is performed during the frame retrieval. In one embodiment, the method further comprises, subsequent to said step of processing, writing the pixel data of a frame of the video image to memory. By performing image region detection prior to writing the pixel data to memory, image processing can be performed efficiently with prior knowledge of the image boundaries.

In one embodiment, the step of performing is carried out as pixel data is streamed therethrough. This reduces the time overhead when processing the video data for edge detection.

In one embodiment, said step of determining comprises defining said image region as a rectangular region having said determined upper right and lower left coordinate indices.

In one embodiment, said step of performing vertical edge detection comprises a plurality of different edge detection algorithms.

In one embodiment, said edge detection algorithms comprise one or both of: median filtered intensity difference thresholding; and recursive average intensity thresholding.

In one embodiment, the method further comprises, subsequent to said step of writing, performing image processing on said frame of video data using the detected boundaries of the image region.

According to a second aspect of the present invention, there is provided apparatus for detecting the boundaries of an image region of video data, the apparatus being configured to perform the steps of the first aspect.

According to a third aspect of the present invention, there is provided a computer program product executable by a programmable processing apparatus, comprising one or more software portions for performing the steps of the first to third aspects.

According to a fourth aspect of the present invention, there is provided a computer usable storage medium having a computer program product according to the eighth aspect stored thereon.

According to a fifth aspect of the present invention, there is provided apparatus for detecting the boundaries of an image region of video data, the apparatus being operable to: retrieve, in raster scan order, pixel data of a frame of video data from a data source; perform, on pixel data of at least some pixels of said frame, edge detection in raster scan order to determine whether the or each pixel lies adjacent an edge region having an edge which is perpendicular or close to perpendicular to the raster scan direction; and determine the boundaries of the image region of said frame from said vertical edge detection.

Embodiments of the present invention will now be described in detail with reference to the accompanying drawings, in which:

Figures 1a) to d) illustrate four different scenarios for different aspect ratio images being shown on a display screen;

Figure 2 is a schematic diagram of the components of a display device;

Figure 3 is a schematic diagram showing a display screen area comprised of a plurality of pixels arranged in scan lines;

Figures 4a) to d) illustrate the four different scenarios shown in Figures 1a) to d) with upper left and lower right image coordinates shown;

Figure 5 is a schematic diagram of the components of the boundary detector shown in Figure 2;

Figure 6 is a schematic diagram of the components of the edge detector shown in Figure 5;

Figure 7a) is a schematic diagram showing a frame of a video image upon which edge detection is to be performed;

Figure 7b) is a schematic diagram similar to Figure 7b) showing the identified image region using boundary detection; and

Figure 8 is a schematic diagram of the process of image boundary detection according to an embodiment of the present invention.

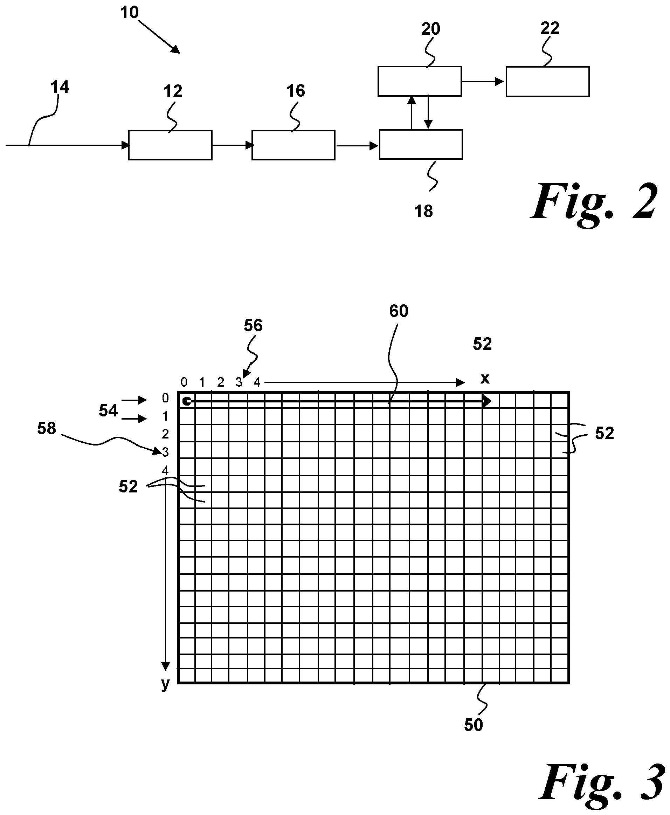

The image border detection method and apparatus of the present invention will now be described with reference to Figures 2 to 8. Figure 2 is a schematic diagram illustrating the components of a display device 10. The display device 10 is operable to process incoming video signals for display on a display screen and may take the form of a device such as a television set.

The display device 10 comprises a receiver 12 operable to retrieve video data 14. The video data 14 may be received from any suitable source - non-exhaustive examples may be: a broadcast signal transmitted by a broadcast transmitter and received by an aerial (not shown) connected to the image processing apparatus 10; a media player (such as a DVD or Blu-ray player) connected to the image processing apparatus 10; or a computer system transmitting video signal data to the image processing apparatus 10.

The receiver 12 acts to retrieve the video data from the data source. Video data is retrieved in individual image frames, with each frame comprising pixel data representing a plurality of pixels in that frame. With regard to the present invention, the exact functioning of the receiver 12 is not material and the receiver 12 merely functions as an input for data to parts of the image processing apparatus 10 computationally downstream of the receiver 12.

Through the receiver 12, each frame of the video data is retrieved and streamed via a boundary detector 16 to a frame buffer 18 in raster scan order. Raster scan order is a common pattern of image storage and transmission used in most image display systems. A frame of a video image is divided into a plurality of pixels arranged in rows of horizontal scan lines.

Each scan line is, therefore, received by, and streamed from, the receiver 12 a row of pixel values in an array in a computer system. The order of transmission/streaming of the image data 14 for each frame of a video image is shown in Figure 3. Figure 3 shows a schematic illustration of a display screen 50 comprising a plurality of pixels 52 arranged in a plurality of rows of horizontal scan lines 54. For clarity, only a relatively small number of pixels are shown in Figure 3. The skilled person would readily appreciate that most display screens will comprise significantly more pixels.

Each pixel has a horizontal x-axis coordinate 56 which identifies the position of that pixel 52 along each scan line 54 starting with the leftmost coordinate 0. Concomitantly, each scan line has a vertical Y-coordinate index 58, starting with the uppermost scan line 0.

The stream of image data 14 for each frame of the video data 14 starts with the pixel which, when displayed, will be located at upper left corner of a display screen, i.e. the pixel with coordinates (0,0). The data 14 is then streamed in the order of increasing pixel coordinate 56 until all of the pixels 52 in the first scan line 54 (i.e. scan line 0) have been streamed. The next scan line 54 (i.e. scan line 1) is then streamed, starting with the leftmost pixel 52 of that scan line 54 (i.e. the pixel having coordinates (0,1)). This ordering of pixels by rows is known as raster scan order.

Returning to Figure 2, the boundary detector 16 is operable to process the stream of video data to determine the location of the boundary of the image region of the frame. This is done as video data is streamed through from the receiver 12 to the frame buffer 18 in raster scan order. The boundary detector 16 processes the stream of data 14 as the data passes therethrough. Consequently, the boundary detection process adds little, if any, delay to the streamed data. Further details of the operation and features of the boundary detector 16 will be described in further detail below.

The data 14 written to the frame buffer 18 has already been boundary detection processed. Consequently, the data 14 written to the frame buffer 18 is ready to be processed by an image processor 20. The image processor 20 is operable to perform image processing on the streamed data 14 stored in the frame buffer 18 and requires knowledge of the image boundaries of the image frame written to the frame buffer 18.

The image processing may be any suitable image processing operation and non-exhaustive examples may include resolution upscaling or downscaling, image correction and frame rate upconversion. These processes, in general, require the image boundaries to have been determined before accurate post-processing of the frames of the video image can be carried out. However, the exact nature and type of post processing to be carried out in the image processor 20 is not material to the present invention and so will not be described further here.

The post-processing of the video image may comprise writing and reading data back and forth to the frame buffer 18. Once the post processing of the video image has been carried out, the post-processed data 14 is displayed on a display 22. The display 22 may comprise any suitable display and non-exhaustive examples may be: a Liquid Crystal Display, an Organic Light Emitting Diode display, a Cathode Ray Tube display or a plasma display. The display 22 may have associated hardware to enable accurate displaying of the video content of the video data 14 to a user. Such hardware may comprise additional elements such as timing circuitry, active matrix elements, backlighting and image correction functions. The functioning of the display 22 is not material to the present invention and will not be discussed further here.

The operation of the boundary detector 16 will now be described. In most cases, a frame or sequence of frames of video data will comprise an image which is essentially rectangular. In other words, most conventional matting is done in a rectangular image area. Therefore, in order to determine the boundaries of the image area, the boundary detector 16 is operable to determine the upper left and lower right corner indices of the image boundary. Due to the rectangular nature of the image boundary, the image boundary can be defined entirely by these indices.

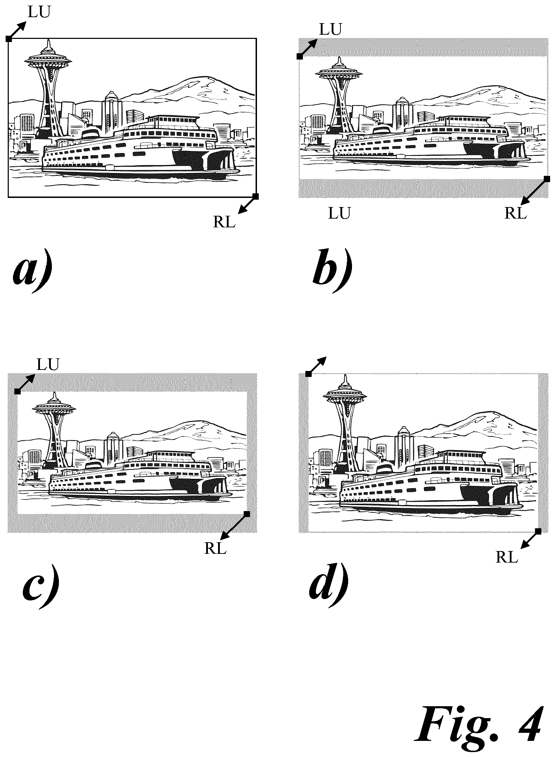

Examples of typical image boundaries can be seen in Figures 4a) to 4d). Figures 4a) to 4d) correspond to Figures 1a) to 1d) however the left upper (LU) pixel coordinate and right lower (RL) pixel coordinates are shown. These define the image boundaries in each of the illustrated cases. The left upper (LU) corner index is composed of the minimum row and column indices of the image and the right lower (RL) corner index is composed of the maximum row and column indices of the image.

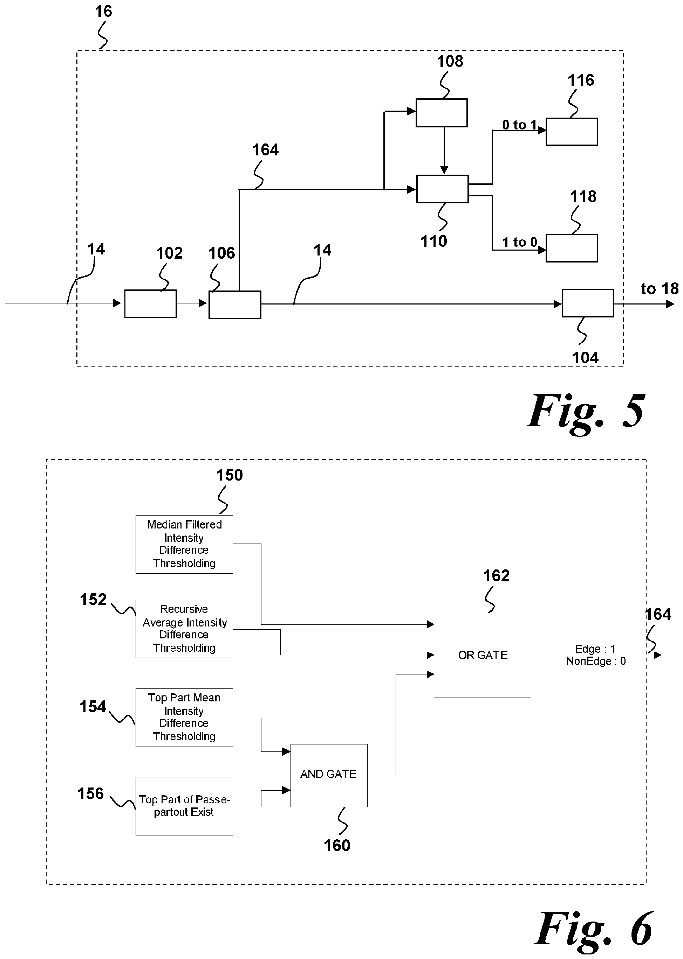

A more detailed schematic view of the boundary detector 16 is shown in Figure 5. The boundary detector 16 is operable to receive streamed video data 14 in raster scan order at an input 102 and perform boundary detection thereon.

Frames of video data 14 are received on a per pixel basis at an input 102 and passed to an output 104 via an edge detector 106. The output 104 passes directly to the frame buffer 18. Therefore, video data 14 is streamed through the boundary detector 16 with relatively little, or no, delay. Any delay generated by the boundary detector 16 is on the scale of a few pixels delay so is easily accommodated in the context of the display device 10 as a whole.

The edge detector 106 is operable to perform vertical edge detection on the received pixel data. In an embodiment, the edge detector 106 is operable to determine whether there is an intensity difference between the current pixel and its right neighbouring pixel (in raster scan order) during the raster scan by thresholding the intensity difference therebetween.

In other words, the edge detector 106 is operable to threshold the intensity difference between a current pixel under consideration and the immediately following pixel on a particular scan line. As will be appreciated, this cannot be performed for the last (i.e. rightmost) pixel on a particular scan line since the next data block will relate to the leftmost pixel on the next scan line down.

When data is processed in raster scan order, vertical edge detection can be used effectively to discriminate the image region from the matte border region. Since the border region is generally a constant colour region, no vertical edges will be present in this region. Consequently, the edge detector 106 will not detect any vertical edges in the border region.

Hence, any vertical edges detected by the edge detector 106 will mean that the pixels currently being processed by edge detector 106 are in the image region. Therefore, using the maximum and minimum indices of the row (i.e. scan line) and column indices of the detected vertical edge pixels, the indices of the left upper and right lower corners of the image region can be determined.

The components and operation of the edge detector 106 will now be described with reference to Figure 6.

In vertical edge detection in the edge detector 106, three different thresholding operations are used. This is to avoid misdetection of an image boundary. The operational components comprise: a median filter thresholder 150, a recursive average thresholder 152 and a mean intensity difference thresholder 154 is used.

The median filter thresholder 150 is used to determine the median filtered intensity difference thresholding of the neighbouring pixels for sharp vertical transitions. In order to avoid outliers due to noise, the median filter thresholder 150 may comprise a 3-tap median filter for calculation of the pixel intensities. The median filter thresholder 150 may operate to process the pixel data according to equation 1) below:

$$1) \quad e_1 = \left| median(I(x-1,y), I(x,y), I(x+1,y)) - median(I(x,y), I(x+1,y), I(x+2,y)) \right| > T_1$$

where $e_1$ is the detected edge value for the median filter thresholder 150 (i.e. the value of e1 is indicative of whether an edge has been detected), I is the pixel intensity, x and y denote the coordinates of the pixels under consideration and $T_1$ is a threshold value above which it is determined that an edge has been detected.

In other words, the median filter thresholder 150 takes the median of the current pixel (at coordinates (x,y)), the previous pixel on that scan line (at coordinates (x-1,y) and the next pixel on that scan line (at coordinates (x+1, y)) and subtracts this median value from the median value of the current pixel (at coordinates (x,y)), the next pixel on that scan line (at coordinates (x+1,y) and the next-but-one pixel on that scan line (at coordinates (x+2, y)). The absolute value of the difference between these median values is then compared to a threshold value $T_1$.

The recursive average thresholder 152 is operable to take the intensity difference threshold between the current pixel and the recursive average intensity in order to detect smooth vertical intensity transitions. In other words, the recursive average thresholder 152 is operable to detect smooth intensity transitions by accumulated intensity averaging.

For each scan line (or row), the intensities of the pixels in that row are averaged and the difference between the average intensity and the current pixel intensity is thresholded for edge detection. After an edge is found, the pixel averaging is reset for detecting new smooth intensity transitions on the rest of the row. The recursive average thresholder 152 is operable to perform the calculation set out in equation 2) below:

$$2) \qquad e_2 = \left| I_{hor\_mean}(x,y) - I(x,y) \right| > T_2$$

Where $e_2$ is the detected edge value for the recursive average thresholder 152 (i.e. the value of $e_2$ is indicative of whether an edge has been detected), $I_{hor\_mean}$ is the average pixel intensity on a horizontal row (or scan line), x and y denote the coordinates of the pixels under consideration and $T_2$ is a threshold value above which it is determined that an edge has been detected, and where $I_{hor\_mean}$ is defined as:

$$3) \qquad I_{hor\_mean}(x,y) = \frac{I_{mean}(x-1,y)*(x-1-x_{last\_edge}) + I(x,y)}{x - x_{last\_edge}}$$

$$I_{hor\_mean}(x_{last\_edge}, y) = I(x_{last\_edge}, y)$$

The mean intensity difference thresholder 154 is operable to determine an intensity difference threshold between the current pixel and the top part of the matte border region (if it is present) in accordance with equation 4):

$$4) \qquad e_3 = \left| I_{all\_mean}(x,y) - I(x,y) \right| > T_3 \,\&\&\, y > T_Y$$

where $e_3$ is the detected edge value for the mean intensity difference thresholder 154 (i.e. the value of e3 is indicative of whether an edge has been detected), $I_{all\_mean}$ is the mean of all the pixels (as defined in equation 5) below), I is the pixel intensity of the pixel under consideration, x and y denote the coordinates of the pixels under consideration and $T_3$ is a threshold value above which it is determined that an edge has been detected. $I_{all\_mean}$ is defined in accordance with equation 5) below:

$$5) \qquad I_{all\_mean}(x,y) = \frac{I_{all\_mean}(x-1,y)*(width*(y-1)+x-1) + I(x,y)}{(width*(y-1)+x)}$$

$$I_{all\_mean}(0,y) = \frac{I_{all\_mean}(width, y-1)*(width*(y-1)) + I(1,y)}{(width*(y-1)+1)}$$

$$I_{all\_mean}(0,0) = I(0,0)$$

All of the above three thresholding techniques used by the median filter thresholder 150, the recursive average thresholder 152 and the mean intensity difference thresholder 154 respectively are compatible with raster scan order processing of the pixels of a frame of the video data 14.

The threshold values $T_1$, $T_2$ and $T_3$ may take any suitable value to enable efficient and accurate edge detection. In general, the intensity of a pixel may take any value between 0 and 255. In one embodiment, the value of each of $T_1$, $T_2$ and $T_3$ may be within 5-6 % of the maximum possible intensity variation in order to detect edges accurately. In other words, in one embodiment, on an intensity scale of 0 to 255, the value for $T_1$, $T_2$ and $T_3$ may be in the region of approximately 11 to 15.

In addition, the edge detector 106 is operable to utilise a further processing element which is the upper border detector 156. The upper border detector 156 is operable to determine whether a constant colour border is present above the image window.

For example, take the case that, in raster scan order, the first encountered edge is detected to be on the $n^{th}$ row (or scan line). If $n$ is greater than a predetermined specified threshold, then it can be concluded that the frame of the video data has a matte (or passé-partout) region at the top of the frame. The average intensity of the already scanned upper part of the frame can then be considered to be the intensity of the border regions surrounding the remainder of the image region. This intensity level can then used to detect image borders in the rest of the frame of the video data 14.

Therefore, the upper border detector 156 is operable to threshold the intensity difference between the current pixel and the determined mean intensity of top border of the image frame. Therefore, the upper border detector 156 can be used as another edge detection method for the image boundary detection algorithm with minimal additional computation required in order to support the three vertical edge detection methods outlined above.

Figure 6 illustrates how the processing performed in each of the median filter thresholder 150, the recursive average thresholder 152, the mean intensity difference thresholder 154 and the upper border detector 156 are used to determine whether an edge has been detected.

As set out above, each of the processing elements 150, 152, 154 and 156 can, individually, determine whether a vertical edge has been detected for a given pixel based on the intensity of that pixel and the neighbouring pixels on that scan line as appropriate.

As defined in equations 1) to 5) above, if any one of the values $e_1$ to $e_3$ exceeds the predefined threshold value $T$ for that particular detection process, then the respective process element 150, 152, 154 and 156 will generate an output of 1 to indicate that an edge has been detected. Concomitantly, if the value of any of $e_1$ to $e_3$ does not exceed the respective threshold $T$ of that particular processing element 150, 152, 154 and 156 then that processing element 150, 152, 154 and 156 will return an output of 0 to indicate that an edge has not been detected by that particular processing algorithm.

The results from each of the processing elements 150, 152, 154 and 156 are then processed to determine whether an edge has been detected. First the outputs from the mean intensity difference thresholder 154 and the upper border detector 156 are inputted into an AND gate 160 which will only generate an output of 1 if both the mean intensity difference thresholder 154 and the upper border detector 156 generate outputs of 1.

The output from the AND gate 160 is then input into an OR gate 162, together with the outputs from the median filter thresholder 150 and the recursive average thresholder 152. Consequently, the OR gate 162 will generate an output 164 of 1 (identifying that an edge has been detected) only if one of the inputs from the AND gate 160, median filter thresholder 150 and the recursive average thresholder 152 is 1. Otherwise, the output 164 is 0, indicating that no vertical edge has been detected.

Returning to Figure 5, the output 164 (either 1 or 0) from the edge detector 106 is then split and passed separately to a delay buffer 108 and to a transition detector 110. The delay buffer 108 may comprise any suitable buffer which stores the value of the output 164 for a particular pixel until the next pixel cycle has been completed. Therefore, the delay buffer 108 retains the edge detection output value 164 of pixel having coordinates (x,y) until the edge detection output value 164 for pixel (x+1, y) has been generated and sent to the transition detector 110. Therefore, due to the delay buffer 108, the transition detector 110 receives the edge detection output values 164 for pixels having coordinates (x,y) and (x+1, y) at the same time (or, in other words, in the same pixel processing cycle).

The transition detector 110 is then operable to compare the edge detection output values 164 for the pixels having coordinates (x,y) and (x+1, y). If pixel (x,y) has an output value 164 of 0 (i.e. no edge was detected) and the pixel (x+1, y) has an output value of 1 (i.e. an edge was detected), and this transition has the lowest x-coordinate on a particular scan line, then the transition detector 110 can identify the leftmost x-coordinate of the image region.

If, in combination with the leftmost x-coordinate, the first 0-1 transition on a scan line is the scan line having the lowest y coordinate upon which any 0-1 transition has been detected by the transition detector 110, then the transition detector 110 can be said to have identified the upper leftmost corner of the image region. In other words, the first detected 0-1 transition in raster scan order can be said to the upper left hand corner of the image region.

When such a transition is detected, the coordinates of the pixel associated with that transition (i.e. the coordinates of the pixel having the edge detection output 164 of 1) is stored in a LU coordinate buffer 116 for use by the image processor 20. In other words, the transition detector 110 will identify the smallest values of the coordinates (x,y) for which a 0-1 transition is found and store this value in the LU coordinate buffer 116 as the upper left coordinates of the image region.

The smallest coordinate values of (x,y) are updated separately. The minimum x coordinate value and minimum y coordinate value may be found from different pixels.

Concomitantly, if pixel (x,y) has an output value 164 of 1 (i.e. an edge was detected) and the pixel (x+1, y) has an output value of 0 (i.e. no edge was detected), and this 1-0 transition has the highest x-coordinate of any transition detected on a particular scan line, then the transition detector 110 can identify the rightmost x-coordinate of the image region.

If, in combination with the x-coordinate, the 1-0 transition having the highest x-coordinate on a scan line is in the scan line having the highest y-coordinate of any 1-0 transition which has been detected by the transition detector 110, then the transition detector 110 can be said to have identified the lower rightmost corner of the image region. In other words, the last detected 1-0 transition in raster scan order can be said to the lower right hand corner of the image region.

When such a transition is detected, the coordinates of the pixel associated with that transition (i.e. the coordinates of the pixel having the edge detection output 164 of 1 in the 1-0 transition) is stored in a RL coordinate buffer 118 for use by the image processor 20. In other words, the transition detector 110 will identify the largest values of the coordinates (x,y) for which a 1-0 transition is found and store this value in the RL coordinate buffer 118 as the lower right coordinates of the image region.

In common with the smallest coordinate values for the x and y coordinates, the largest coordinate values of (x,y) may be updated separately. The maximum x coordinate value and maximum y coordinate value may be found from different pixels.

The LU and RL buffers 116, 118 are continuously updated throughout the raster scan of an image frame of video with the pixels having the smallest x, y coordinates for 0-1 transitions being assigned the LU coordinates in the LU buffer 116 and the pixels having the largest x, y coordinates for 1-0 transitions being assigned the RL coordinates in the RL buffer 118. Once a frame has been streamed to the frame buffer 18 for image processing by the image processor 20, the final determined coordinates of the LU and RL buffers 116, 118 are supplied to the image processor 20 to enable accurate post processing of the frame of the video data 14.

The LU and RL coordinates are then retained in the buffers 116, 118 until they are updated by the raster scan edge analysis of the next frame in the video image.

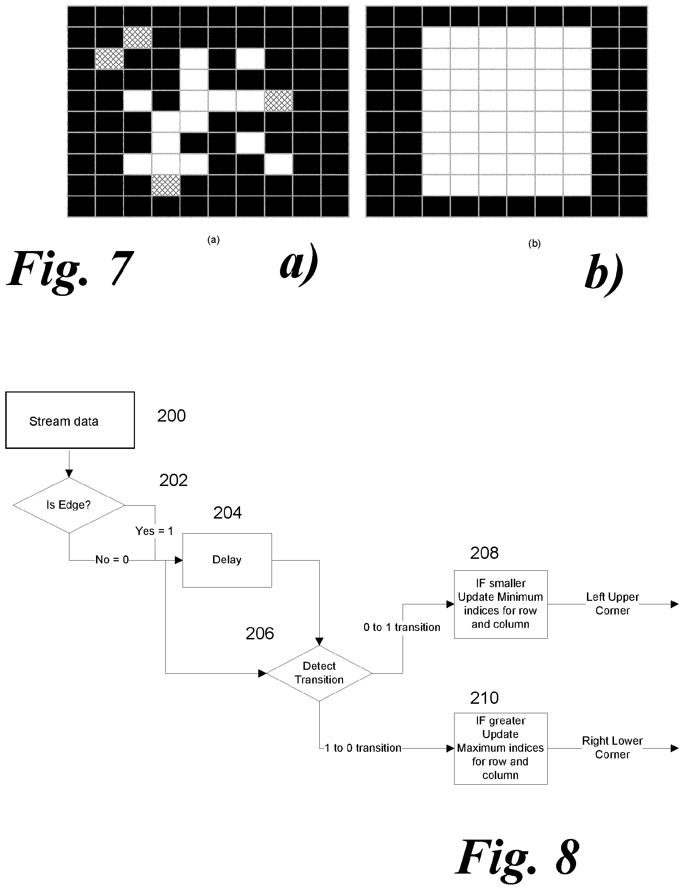

An illustration of the edge-detected pixels of a frame is shown in Figure 7a). Pixels of the image are illustrated by the white and hashed pixels. Again, in raster scan order, keeping the non-edge to edge (black to white) and edge to non-edge (white to black) transitions the minimum and maximum indices of the image border transitions can be obtained. The key transitions for minimum and maximum indices are rastered in the Figure. Hence the region of interest can be derived as in Figure 7b) using the apparatus described above.

The method of operation of the edge detection of the present invention will now be described with reference to Figure 8. Figure 8 shows a flow diagram of the operation of the edge detector 106 of the present invention.

*Step 200: Stream incoming data*

At step 200, the incoming pixel data for a frame of a video image is input from the receiver 12 to the boundary detector 16. The pixel data is streamed in raster scan order starting with the upper leftmost pixel of the frame of the video image. The data is passed from the input 102 to the edge detector 106 for processing of the intensity and colour information associated with each pixel.

The method now proceeds to step 202.

*Step 202: Detect edge*

At step 202 the edge detector 106 is used to determine where the current pixel of the frame of video data is on a vertical edge. For the purposes of this example, the current pixel cycle (i.e. the pixel currently being edge detection processed in raster scan order) is the pixel data having coordinates (x+1, y).

The edge detection is performed using the four processing elements 150, 152, 154 and 156 as set out above in relation to Figure 6 above. If an edge is detected, the edge detection output value 164 is output as 1. If an edge is not detected, the edge detection output value 164 is output as 0.

The method then proceeds to step 304.

*Step 204: Delay result*

In step 204, the output value from pixel (x+1, y) is sent to delay buffer 108 which is used to delay the output result from step 202 for pixel (x+1, y) by one pixel cycle. Therefore, the output value for pixel (x+1, y) will not be available to the transition detector 110 in step 206 until the next pixel cycle, i.e. for pixel (x+2, y).

Simultaneously, the output value 164 for pixel cycle (x+1, y) is also sent to the transition detector 110 for transition detection in step 206.

The method proceeds to step 206.

*Step 206: Detect transition*

At step 206, the transition from edge to non-edge regions, or from non-edge to edge regions is detected in the transition detector 110. The output value 164 from a given pixel cycle (in this case, for pixel (x+1, y) will arrive at the transition detector 110 at the same time as the output value 164 from the previous pixel cycle which has been delayed by the delay buffer 108.

The transition detector 110 compares the edge detection output values 164 for the pixels having coordinates (x+1,y) with that of the previous pixel cycle, i.e. with pixel (x, y). If pixel (x,y) has an output value 164 of 0 (i.e. no edge was detected) and the pixel (x+1, y) has an output value of 1 (i.e. an edge was detected), then a 0-1 transition has been detected and the method proceeds to step 208.

Alternatively, if pixel (x,y) has an output value 164 of 1 (i.e. an edge was detected) and the pixel (x+1, y) has an output value of 0 (i.e. no edge was detected), then a 1-0 transition has been detected and the method proceeds to step 210.

*Step 208: Update LU buffer*

If a 0-1 transition is detected in step 206, in step 208 it is determined whether this 0-1 transition is the upper leftmost pixel (x, y) coordinates yet detected for such a transition.

If the LU buffer 116 is currently empty, the pixel coordinates of the first 0-1 detected transition in raster scan order is recorded in the LU buffer 116. However, if a coordinate value is already stored in the LU buffer 116 (for example, from a previous frame of the video image) then it is determined whether the newly detected 0-1 transition relates to a pixel having smaller (x, y) coordinates than those currently stored. If so, the LU buffer 116 is updated with the new coordinates representing the upper left corner of the image region. The new coordinates can be used by the image processor 20 for accurate post-processing of the image region.

The process then returns to step 200 for the next pixel cycle. The LU coordinates are then retained in the LU buffer 116 until they are updated by the raster scan edge analysis in, for example, the next frame of the video image.

*Step 210: Update RL buffer*

If a 1-0 transition is detected in step 206, in step 210 it is determined whether this 1-0 transition is the lower rightmost pixel (x, y) coordinates yet detected for such a transition.

If the RL buffer 118 is currently empty, the pixel coordinates of the last detected 1-0 transition in raster scan order for a frame is recorded in the RL buffer 118. However, if a coordinate value is already stored in the RL buffer 118 (for example, from a previous frame of the video image) then it is determined whether the newly detected 1-0 transition relates to a pixel having larger (x, y) coordinates than those currently stored. If so, the RL buffer 118 is updated with the new coordinates representing the lower right corner of the image region. The new coordinates can be used by the image processor 20 for accurate post-processing of the image region.

The process then returns to step 200 for the next pixel cycle. The RL coordinates are then retained in the RL buffer 118 until they are updated by the raster scan edge analysis in, for example, the next frame of the video image.

The present invention provides a straightforward and effective method of determining image boundaries prior to performing image processing. By performing edge detection analysis on pixel data during streaming/writing of said data to a frame buffer, the image region can be determined with relatively small hardware overhead and little, if any, delay.

Variations of the above embodiments will be apparent to the skilled person. The precise configuration of hardware and software components may differ and still fall within the scope of the present invention.

For example, in cases where a matte region is detected at the top part of a frame of a video image, the colour information of the border region can be derived in raster scan order and can be utilised in the rest of the frame scan for correctly locating the image borders.

Embodiments of the present invention have been described with particular reference to the examples illustrated. While specific examples are shown in the drawings and are herein described in detail, it should be understood, however, that the drawings and detailed description are not intended to limit the invention to the particular form disclosed. It will be appreciated that variations and modifications may be made to the examples described within the scope of the present invention.

**Claims**

1. A method for detecting the boundaries of an image region of video data, the method comprising:

   retrieving (200), in raster scan order, pixel data of a frame of video data from a data source;
   performing (202), on pixel data of at least some pixels of said frame, edge detection for each of said pixels in raster scan order to determine whether the or each pixel lies adjacent an edge region which is perpendicular to, or close to perpendicular to, the raster scan direction, wherein the pixel data are read in scan line order and wherein said edge detection is based on pixel data of pixels of a current scan line; determining (206) the boundaries of the image region of said frame from said edge detection by comparing edge detected pixels adjacent one another in raster scan order to determine a transition from a non-edge region to an edge region or from an edge region to a non-edge region;
   identifying, from any pixels having a transition from a non-edge region to an edge region, the pixel having, in raster scan order, the smallest horizontal and vertical coordinate indices;
   defining said pixel coordinates as the upper left corner of the image region;
   identifying, from any pixels having a transition from an edge region to a non-edge region, the pixel having, in raster scan order, the largest horizontal and vertical coordinate indices; and
   defining said pixel coordinates as the lower right corner of the image region.

2. A method according to any one of the preceding claims, wherein the step of processing is performed during the frame retrieval.

3. A method according to claim 1 or 2, further comprising, subsequent to said step of processing, writing the pixel data of a frame of the video image to memory.

4. A method according to claim 3, wherein the step of performing is carried during streaming of pixel data to memory.

5. A method according to claim 1, wherein said step of determining comprises defining said image region as a rectangular region having said determined upper right and lower left coordinate indices.

6. A method as claimed in any one of the preceding claims, wherein said step of performing edge detection comprises a plurality of different edge detection algorithms.

7. A method as claimed in claim 6, wherein said edge detection algorithms comprises one or both of: median filtered intensity difference thresholding; and recursive average intensity thresholding.

8. A method as claimed in any one of the preceding claims, wherein the raster scan order direction is horizontal and the step of detecting detects vertical edges.

9. A method according to claim 3 or 4, further comprising, subsequent to said step of writing, performing image processing on said frame of video data using the detected boundaries of the image region.

10. Apparatus (16) for detecting the boundaries of an image region of video data, the apparatus being configured to perform the steps of any one of claims 1 to 9.

11. A computer program product executable by a programmable processing apparatus, comprising instructions which, when the program is executed by the programmable processing apparatus, cause the programmable processing apparatus to carry out the steps of any one of claims 1 to 9.

12. A computer usable storage medium having a computer program product according to claim 11 stored thereon.

**Patentansprüche**

1. Verfahren zum Erkennen der Grenzen eines Bildbereichs von Videodaten, wobei das Verfahren aufweist:

   Abrufen (200) von Pixeldaten eines Rahmens von Videodaten aus einer Datenquelle in Rasterscan-Reihenfolge;
   Ausführen (202) einer Kantenerkennung für jedes der Pixel in Rasterscan-Reihenfolge an Pixeldaten von mindestens einigen Pixeln des Rahmens, um zu bestimmen, ob das oder die Pixel an einen Kantenbereich angrenzend liegt oder liegen, der senkrecht oder nahezu senkrecht zu der Rasterscan-Richtung ist, wobei die Pixeldaten in Scanzeilen-Reihenfolge gelesen werden, und wobei die Kantenerkennung auf Pixeldaten von Pixeln einer aktuellen Scanzeile beruht;

Bestimmen (206) der Grenzen des Bildbereichs des Rahmen aus der Kantenerkennung durch Vergleichen von Pixeln mit erkannten Kanten, die in Rasterscan-Reihenfolge aneinander angrenzen, um einen Übergang von einem Nichtkantenbereich zu einem Kantenbereich oder von einem Kantenbereich zu einem Nichtkantenbereich zu bestimmen;

Identifizieren des Pixels, das in Rasterscan-Reihenfolge die kleinsten horizontalen und vertikalen Koordinatenindizes hat, aus allen Pixeln, die einen Übergang von einem Nichtkantenbereich zu einem Kantenbereich haben;

Definieren der Pixelkoordinaten als die linke obere Ecke des Bildbereichs;

Identifizierendes Pixels, das in Rasterscan-Reihenfolge die größten horizontalen und vertikalen Koordinatenindizes hat, aus allen Pixeln, die einen Übergang von einem Kantenbereich zu einem Nichtkantenbereich haben; und

Definieren der Pixelkoordinaten als die rechte untere Ecke des Bildbereichs.

2. Verfahren nach einem der vorhergehenden Ansprüche, wobei der Schritt des Verarbeitens während des Rahmenabrufs ausgeführt wird.

3. Verfahren nach Anspruch 1 oder 2, ferner aufweisend, anschließend an den Schritt des Verarbeitens, Schreiben der Pixeldaten eines Rahmens des Videobilds in einen Arbeitsspeicher.

4. Verfahren nach Anspruch 3, wobei der Schritt des Verarbeitens während eines Streamens von Pixeldaten in den Arbeitsspeicher ausgeführt wird.

5. Verfahren nach Anspruch 1, wobei der Schritt des Bestimmens ein Definieren des Bildbereichs als einen rechtwinkligen Bereich aufweist, der die bestimmten Koordinatenindizes oben rechts und unten links hat.

6. Verfahren nach einem der vorhergehenden Ansprüche, wobei der Schritt des Ausführens der Kantenerkennung eine Mehrzahl von verschiedenen Kantenerkennungs-Algorithmen aufweist.

7. Verfahren nach Anspruch 6, wobei die Kantenerkennungs-Algorithmen eines oder beides aufweisen von: Grenzwertüberwachung von mittlerer gefilterter Intensitätsdifferenz; und Grenzwertüberwachung von rekursiver durchschnittlicher Intensität.

8. Verfahren nach einem der vorhergehenden Ansprüche, wobei die Richtung der Rasterscan-Reihenfolge horizontal ist und der Schritt des Erkennens vertikale Kanten erkennt.

9. Verfahren nach Anspruch 3 oder 4, ferner aufweisend, anschließend an den Schritt des Schreibens, Ausführen einer Bildverarbeitung an dem Rahmen von Videodaten unter Verwendung der erkannten Grenzen des Bildbereichs.

10. Vorrichtung (16) zum Erkennen der Grenzen eines Bildbereichs von Videodaten, wobei die Vorrichtung so ausgelegt ist, dass sie die Schritte von jedem der Ansprüche 1 bis 9 ausführt.

11. Computerprogrammprodukt, ausführbar durch eine programmierbare Verarbeitungsvorrichtung, das Anweisungen aufweist, die bei Ausführung des Programms durch die programmierbare Verarbeitungsvorrichtung die programmierbare Verarbeitungsvorrichtung veranlassen, die Schritte von jedem der Ansprüche 1 bis 9 auszuführen.

12. Von einem Computer verwendbares Speichermedium, auf dem ein Computerprogrammprodukt gemäß Anspruch 11 gespeichert ist.

**Revendications**

1. Méthode de détection des limites d'une zone d'image de données vidéo, la méthode comprenant :

la récupération (200) en ordre de balayage de trame, des données de pixel d'une trame de données vidéo d'une source de données ;

l'exécution (202), sur des données de pixel d'au moins certains pixels de ladite trame, d'une détection marginale pour chacun desdits pixels dans l'ordre de balayage de trame afin de déterminer si le ou chaque pixel est adjacent à une zone de bord perpendiculaire, ou presque perpendiculaire, à la direction de balayage de trame, les données de pixel étant relevées dans un ordre de ligne de balayage, et ladite détection de bord étant basée sur des données de pixel de pixels d'une ligne de balayage actuelle ;

la détermination (206) des limites de la zone d'image de ladite trame d'après ladite détection de bord, en comparant des pixels détectés sur le bord adjacents entre eux dans l'ordre de balayage de trame pour déterminer une transition d'une zone non marginale à une zone marginale, ou d'une zone marginale à une zone non marginale ;

l'identification, depuis des pixels quelconques présentant une transition d'une zone non marginale à une zone marginale, du pixel présentant, dans l'ordre de balayage de trame, des indices de coordonnées horizontales et verticales les plus petits ;

la définition desdites coordonnées de pixels comme étant le coin supérieur gauche de la zone d'image ;

l'identification, depuis des pixels quelconques présentant une transition d'une zone marginale à une zone non marginale, du pixel présentant, dans l'ordre de balayage de trame, les indices de coordonnées horizontales et verticales les plus grands ;

la définition desdites coordonnées de pixel comme étant le coin inférieur droit de la zone d'image.

2. Méthode selon une quelconque des revendications précédentes, l'étape de traitement étant effectuée au cours de la récupération de la trame.

3. Méthode selon la revendication 1 ou 2, comprenant en outre, suite à ladite étape de traitement, l'écriture en mémoire des données de pixels de la trame de l'image vidéo.

4. Méthode selon la revendication 3, l'étape d'exécution étant effectuée au cours de la transmission de données de pixel à la mémoire.

5. Méthode selon la revendication 1, ladite étape de détermination comprenant la définition de ladite zone d'image comme zone rectangulaire présentant lesdits indices de coordonnées supérieur droit et inférieur gauche déterminés.

6. Méthode selon une quelconque des revendications précédentes, ladite étape d'exécution de détection marginale comprenant une pluralité d'algorithmes de détection marginale divers.

7. Méthode selon la revendication 6, lesdits algorithmes de détection marginale comprenant un des suivants : seuillage médian de la différence d'intensité filtrée, et seuillage de l'intensité moyenne récursive, ou les deux.

8. Méthode selon une quelconque des revendications précédentes, la direction d'ordre de balayage de trame étant horizontale et l'étape de détection détectant des bords verticaux.

9. Méthode selon la revendication 3 ou 4, comprenant en outre, à la suite de ladite étape d'écriture, l'exécution d'un traitement de l'image sur ladite trame de données vidéo en utilisant les limites détectées de la zone d'image.

10. Appareil (16) pour la détection des limites d'une zone d'image de données vidéo, l'appareil étant configuré pour effectuer les étapes d'une quelconque des étapes 1 à 9.

11. Programme informatique exécutable par un appareil de traitement programmable, comprenant des instructions qui, lors de l'exécution du programme par l'appareil de traitement programmable, détermine l'exécution, par l'appareil de traitement programmable, d'une quelconque des étapes des revendications 1 à 9.

12. Support de stockage utilisable sur ordinateur sur lequel est placé un programme informatique selon la revendication 11.

a)

b)

c)

d)

*Fig. 1*

Fig. 2

Fig. 3

**Fig. 4**

*Fig. 5*

*Fig. 6*

(a)                          (b)

*Fig. 7*          *a)*                          *b)*

*Fig. 8*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6208385 A

• EP 2107521 A

**Non-patent literature cited in the description**

• **P. KRÄHENBÜHL P et al.** A system for retargeting of streaming video. *ACM Transactions on Graphics,* 2009, vol. 28 (5), 1